# EUROPEAN PATENT APPLICATION

(11) **EP 4 436 234 A1**
(43) Date of publication of application: **25.09.2024**
(21) Application number: 21963726.1
(22) Date of filing: 15.11.2021
(51) Int. Cl.: H04W 16/18, H04B 17/391

(54) **MODEL UPDATING METHOD FOR WIRELESS CHANNEL PROCESSING, APPARATUS, TERMINAL, AND MEDIUM**

(71) Applicant: GUANGDONG OPPO MOBILE TELECOMMUNICATIONS CORP., LTD., Dongguan, Guangdong 523860 (CN)
(72) Inventor: TIAN, Wenqiang, Dongguan, Guangdong 523860 (CN)
(74) Representative: Taor, Simon Edward William
(86) International application number: PCT/CN2021/130750
(87) International publication number: WO 2023/082280

(57) **Abstract**

The present application relates to the technical field of communications, and discloses a model updating method for wireless channel processing, an apparatus, a terminal, and a medium. The method comprises: a first wireless communication device identifies the type of a wireless channel; and the first wireless communication device determines a wireless channel dataset that is adapted to the type of the wireless channel, wherein a wireless communication dataset is used for updating a machine learning model. According to a band-new method for updating a machine learning model for wireless channel processing provided by the present application, for different wireless channels, the machine learning models corresponding to the types of the wireless channels can be constructed.

## Description

### TECHNICAL FIELD

The disclosure relates to the field of communications, and in particular to a method and an apparatus for updating a model for processing a wireless channel, a terminal and a medium.

### BACKGROUND

Artificial Intelligence (AI)-based solutions are increasingly applied to wireless communication systems, for example, a machine learning model for processing a wireless channel is determined through AI.

Related technologies may pre-build different machine learning models for different wireless channels and scenarios, and then select a machine learning model corresponding to a wireless channel and scenario in a specific environment, to determine the machine learning model for processing the wireless channel.

However, in related technologies, machine learning models for various wireless channels and scenarios need to be prepared in advance, in addition, a large number of machine learning models need to be prepared due to complexity of the wireless channels, which may consume a large storage space.

### SUMMARY

Embodiments of the disclosure provide a method and an apparatus for updating a model for processing a wireless channel, a terminal and a medium. Specifically, the embodiments provide a method for updating a machine learning model based on a type of a wireless channel.

According to an aspect of the embodiments of the disclosure, there is provided a method for updating a model for processing a wireless channel. The method is carried out by a first wireless communication device and includes the following operations.

The first wireless communication device identifies a type of the wireless channel.

The first wireless communication device determines a wireless channel dataset adapted to the type of the wireless channel. The wireless communication dataset is configured to update a machine learning model.

According to another aspect of the embodiments of the disclosure, there is provided a first wireless communication apparatus. The apparatus includes a first updating module and a first cooperation module.

The first updating module is configured to identify a type of a wireless channel.

The first cooperation module is configured to determine a wireless channel dataset adapted to the type of the wireless channel. The wireless communication dataset is configured to update a machine learning model.

According to another aspect of the embodiments of the disclosure, there is provided a method for updating a model for processing a wireless channel. The method is carried out by a second wireless communication device and includes the following operations.

The second wireless communication device determines a wireless channel dataset corresponding to a type of the wireless channel. The type of the wireless channel is identified by a first wireless communication device, and the wireless communication dataset is configured to update a machine learning model.

According to another aspect of the embodiments of the disclosure, there is provided a second wireless communication apparatus. The apparatus includes a second cooperation module.

The second cooperation module is configured to determine a wireless channel dataset corresponding to a type of the wireless channel. The type of the wireless channel is identified by a first wireless communication apparatus, and the wireless communication dataset is configured to update a machine learning model.

According to another aspect of the embodiments of the disclosure, there is provided a terminal. The terminal includes a processor, a transceiver connected to the processor, and a memory configured to store instructions executable by the processor.

The processor is configured to load and execute the executable instructions, to implement the method for updating a model for processing a wireless channel of any one of the above aspects.

According to another aspect of the embodiments of the disclosure, there is provided a chip. The chip is configured to implement the method for updating a model for processing a wireless channel of any one of the above aspects.

According to another aspect of the embodiments of the disclosure, there is provided a computer-readable storage medium. The computer-readable storage medium have stored thereon at least one instruction, at least one section of program, a code set or an instruction set. The at least one instruction, the at least one section of program, the code set or the instruction set is loaded and executed by a processor, to implement the method for updating a model for processing a wireless channel of any one of the above aspects.

Technical solutions provided in the embodiments of the disclosure include the following advantageous effects.

The method determines, according to the type of the wireless channel, the wireless channel dataset required to update the machine learning model. Adaptation and application of the wireless channel and the machine learning model in the wireless communication system according to requirements can be achieved, to avoid a problem of poor performance of a single machine learning model in multiple scenarios, and avoid costs of building, transmission and storage required to prepare multiple machine learning models in advance.

### BRIEF DESCRIPTION OF THE DRAWINGS

FIG. 1 is a schematic diagram illustrating a communication system according to an exemplary embodiment.
FIG. 2 is a flowchart illustrating a method for updating a model for processing a wireless channel according to an exemplary embodiment.
FIG. 3 is a flowchart illustrating a transmission channel discrimination module according to an exemplary embodiment.
FIG. 4 is a schematic diagram illustrating training of a machine learning model according to an exemplary embodiment.
FIG. 5 is a flowchart illustrating a method for updating a model for processing a wireless channel according to an exemplary embodiment.
FIG. 6 is a flowchart illustrating pre-configuration of a machine learning model according to an exemplary embodiment.
FIG. 7 is a flowchart illustrating pre-configuration of a machine learning model according to an exemplary embodiment.
FIG. 8 is a flowchart illustrating a method for updating a model for processing a wireless channel according to an exemplary embodiment.
FIG. 9 is a flowchart illustrating a method for updating a model for processing a wireless channel according to an exemplary embodiment.
FIG. 10 is a flowchart illustrating a method for updating a model for processing a wireless channel according to an exemplary embodiment.
FIG. 11 is a flowchart illustrating a method for updating a model for processing a wireless channel according to an exemplary embodiment.
FIG. 12 is a flowchart illustrating transmission of a channel generator according to an exemplary embodiment.
FIG. 13 is a flowchart illustrating transmission of a type of a wireless channel according to an exemplary embodiment.
FIG. 14 is a flowchart illustrating transmission of a machine learning model according to an exemplary embodiment.
FIG. 15 is a flowchart illustrating a method for updating a model for processing a wireless channel according to an exemplary embodiment.
FIG. 16 is a flowchart illustrating a method for updating a model for processing a wireless channel according to an exemplary embodiment.
FIG. 17 is a flowchart illustrating transmission of a wireless channel dataset according to an exemplary embodiment.
FIG. 18 is a flowchart illustrating transmission of a wireless channel dataset according to an exemplary embodiment.
FIG. 19 is a flowchart illustrating transmission of a wireless channel dataset according to an exemplary embodiment.
FIG. 20 is a flowchart illustrating transmission of a machine learning model according to an exemplary embodiment.
FIG. 21 is a flowchart illustrating a method for updating a model for processing a wireless channel shown according to an exemplary embodiment.
FIG. 22 is a flowchart illustrating a method for updating a model for processing a wireless channel according to an exemplary embodiment.
FIG. 23 is a flowchart illustrating transmission of a wireless channel dataset according to an exemplary embodiment.
FIG. 24 is a flowchart illustrating a method for updating a model for processing a wireless channel according to an exemplary embodiment.
FIG. 25 is a flowchart illustrating a method for updating a model for processing a wireless channel according to an exemplary embodiment.
FIG. 26 is a block diagram illustrating a first wireless communication apparatus according to an exemplary embodiment.
FIG. 27 is a block diagram illustrating a second wireless communication apparatus according to an exemplary embodiment.
FIG. 28 is a schematic structural diagram illustrating a first wireless communication device according to an exemplary embodiment.
FIG. 29 is a schematic structural diagram illustrating a second wireless communication device according to an exemplary embodiment.

### DETAILED DESCRIPTION

In order to make the purpose, technical solutions and advantages of the disclosure clearer, implementations of the disclosure will be further described in detail below with reference to the drawings.

Network architectures and business scenarios described in the embodiments of the disclosure are intended to explain the technical solutions of the embodiments of the disclosure more clearly, and do not constitute limitations to the technical solutions provided in the embodiments of the disclosure. It may be known by those of ordinary skill in the art that with the evolution of network architectures and appearance of new business scenarios, the technical solutions provided in the embodiments of the disclosure are also applicable to similar technical problems.

The technical solutions of the embodiments of the disclosure may be applied to various communication systems, such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced Long Term Evolution (LTE-A) system, a New Radio (NR) system, an evolution system of the NR system, an LTE-based access to unlicensed spectrum (LTE-U) system, an NR-based access to unlicensed spectrum (NR-U) system, a Non-Terrestrial Networks (NTN) system, a Universal Mobile Telecommunication System (UMTS), a Wireless Local Area Network (WLAN), Wireless Fidelity (WiFi), a 5th-Generation (5G) system, or other communication systems, etc.

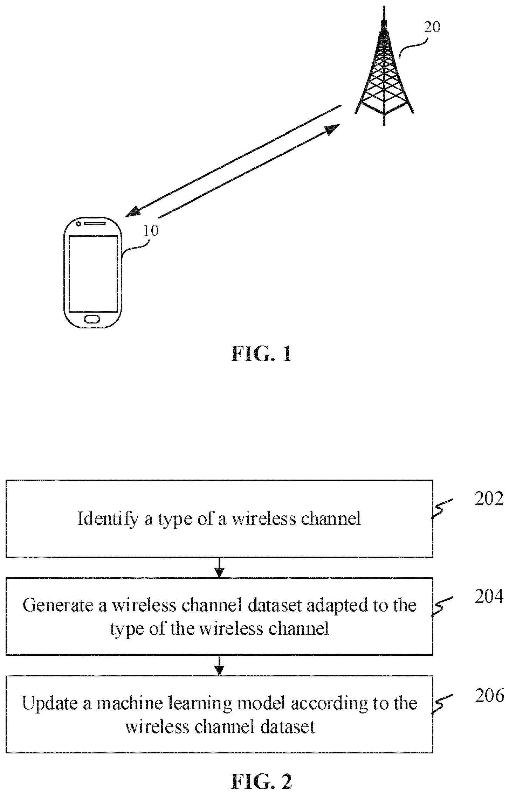

FIG. 1 shows a schematic diagram of a mobile communication system provided in an embodiment of the disclosure. The mobile communication system may include a first wireless communication device 10 and a first wireless communication device 20.

There are usually multiple first wireless communication devices 10, and one or more first wireless communication devices 10 may be distributed in a cell managed by each second wireless communication device 20. The first wireless communication device 10 may include various hand-held devices, vehicle-mounted devices, wearable devices, computing devices with mobile communication functions, or other processing devices connected to a wireless modem, as well as various forms of User Equipment (UE), Mobile Stations (MS), etc. For convenience of descriptions, in the embodiments of the disclosure, the above-mentioned devices are collectively referred to as terminals.

The second wireless communication device 20 is an apparatus deployed in an access network and configured to provide a mobile communication function for the first wireless communication device 10. The second wireless communication device 20 may include various forms of macro base stations, micro base stations, relay stations, access points, Location Management Function (LMF) entities, etc. In systems using different wireless access technologies, names of devices with a function of an access network device may be different. For example, in a 5G NR system, it is referred to as gNodeB or gNB. With the evolution of communication technologies, the name "access network device" may vary. For convenience of descriptions, in the embodiments of the disclosure, the above apparatuses for providing the mobile communication function to the first wireless communication device 10 are collectively referred to as access network devices. A connection may be established between the second wireless communication device 20 and the first wireless communication device 10 through an air interface, to perform communication through the connection, including signaling and data interaction. There may be multiple second wireless communication devices 20, and communication between two adjacent second wireless communication devices 20 may also be performed in a wired or wireless manner. The first wireless communication device 10 may switch between different second wireless communication devices 20, that is, it may establish connections with different second wireless communication devices 20. In the embodiment, the first wireless communication device 10 may be considered as a terminal device, and the second wireless communication device may be considered as an access network device.

The "5G NR system" in the embodiments of the disclosure may also be referred to as a 5G system or an NR system, those skilled in the art may understand its meaning. The technical solutions described in the embodiments of the disclosure may be applicable to the 5G NR system, and may also be applicable to subsequent evolution systems of the 5G NR system.

FIG. 2 shows a flowchart of a method for updating a model for processing a wireless channel provided in an exemplary embodiment of the disclosure. The embodiment is applied to the communication system shown in FIG. 1 as an example, and the method includes the following operations 202 to 206.

At operation 202, a type of a wireless channel is identified.

Optionally, the first wireless communication device identifies the type of the wireless channel.

The type of the wireless channel is predefined by a communication protocol, or predefined inside UE, or configured by a base station to the UE.

Optionally, the type of the wireless channel includes a scenario feature of the wireless channel. Illustratively, the scenario feature includes, but is not limited to at least one of: indoor environment/outdoor environment, dense residential area/open field, Line Of Sight (LOS)/ Non Line Of Sight (NLOS), or high speed/low speed.

Optionally, the type of the wireless channel includes an index feature of the wireless channel. Illustratively, the index feature includes at least one of: time domain feature information, frequency domain feature information, or spatial feature information. Illustratively, the index feature may further include at least one of: delay power spectrum information, multipath information, angle information, or speed information.

Optionally, the first wireless communication device identifies the type of the wireless channel through a channel category discrimination model.

Optionally, input information of the channel category discrimination model may also be a channel environment where the first wireless communication device is located. Illustratively, the channel environment includes a time domain channel and a frequency domain channel. The channel environment further includes channel environments under different bandwidths, delays, antennas and speed conditions.

An output of the channel category discrimination model includes at least one of: a category identifier of the wireless channel, a category scenario identifier of the wireless channel, or an index category identifier of the wireless channel.

Optionally, the category identifier of the wireless channel is configured to indicate a category of the wireless channel.

Optionally, the category scenario identifier of the wireless channel is configured to represent the scenario feature of the wireless channel through a feature identifier. Illustratively, the scenario feature of the wireless channel includes at least one of: indoor environment/outdoor environment, dense residential area/open field, LOS/NLOS, or high speed/low speed. For example, a correspondence between the category scenario identifiers of the wireless channel and scenario categories of the wireless channel may be as shown in Table 1.

**Table 1 Correspondence between category scenario identifiers of the wireless channel and scenario categories of the wireless channel**

| Category identifier | Scenario feature |
|---|---|
| 1 | Indoor environment |
| 2 | Outdoor environment |
| 3 | Dense residential area |
| 4 | Open field |
| 5 | LOS |
| 6 | NLOS |
| 7 | High speed |
| 8 | Low speed |
| Xa-Xb | Combination of the above scenarios |

Optionally, the index category identifier of the wireless channel is configured to represent the index feature of the wireless channel through an index identifier, and the index feature includes at least one of: time domain feature information, frequency domain feature information, or spatial feature information. Illustratively, the index feature of the wireless channel includes, but is not limited to at least one of: delay power spectrum information, multipath information, angle information, or speed information. For example, a correspondence between the index category identifiers of the wireless channel and the index features of the wireless channel is shown in Table 2.

**Table 2 Correspondence between index category identifiers of the wireless channel and index features of the wireless channel**

| Category identifier | Index feature |
|---|---|
| Ya-Yb | Different types of delay power spectrum information |
| Yc-Yd | Different types of multipath information |
| Ye-Yf | Different angle domain information, such as sending angle and arrival angle information |
| Yg-Yh | Different speed classifications |
| Yi-Yj | Combination of the above scenarios |

Illustratively, the channel category discrimination model may be composed of a machine learning-based channel discrimination algorithm. For example, the channel category discrimination model may be built by methods such as a binary tree building, support vector machine, classification algorithm, etc. It may also be built by a deep neural network. For example, the channel category discrimination model may be built by methods such as a fully connected network, a convolutional neural network, a residual network, an attention mechanism, etc.

The channel category discrimination model is predefined by a communication protocol, or predefined by the first wireless communication device, or configured by the second wireless communication device to the first wireless communication device.

On the other hand, a type division mode of the wireless channel is defined by at least one of: the type division mode of the wireless channel predefined by a communication protocol; the type division mode of the wireless channel predefined by the first wireless communication device; or, the type division mode of the wireless channel configured by a second wireless communication device to the first wireless communication device.

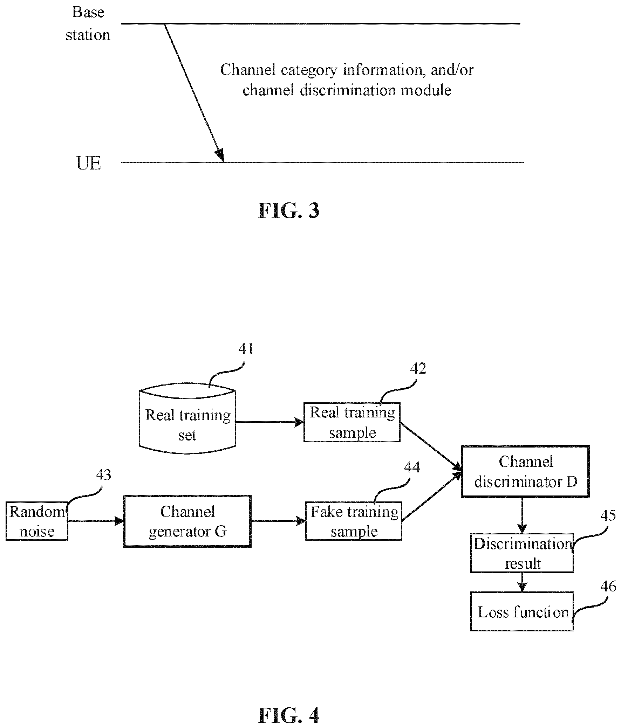

As shown in FIG. 3, in case that the type division mode of the wireless channel and/or the channel category discrimination model is configured by the second wireless communication device to the first wireless communication device, the base station configures the type division mode of the wireless channel and/or the channel category discrimination model to the UE through: downlink control signaling, or an Media Access Control Control Element (MAC CE), or a Radio Resource Control (RRC) reconfiguration message, or a broadcast message, or data information carried on a downlink AI-type data transmission channel, or transmission of data information carried on a downlink data channel.

In a specific implementation, the base station transmits the type division mode of the wireless channel to the UE through the RRC reconfiguration message. Alternatively, the base station transmits the channel category discrimination model to the UE through the RRC reconfiguration message.

In a specific implementation, the base station transmits the above type division mode of the wireless channel and/or the channel category discrimination model to the UE through the downlink control signaling in combination with downlink data transmission. The downlink control signaling indicates a transmission mode for transmitting the type division mode of the wireless channel and/or the channel category discrimination model, the downlink data transmission is configured to transmit the type division mode of the wireless channel and/or the channel category discrimination model.

In a specific implementation, the base station transmits the above type division mode and/or the channel category discrimination model to the UE through an RRC message in combination with downlink data transmission. The RRC message indicates a transmission mode for transmitting the above type division mode and/or the channel category discrimination model, the downlink data transmission is configured to transmit the type division mode and/or the channel category discrimination model.

At operation 204, a wireless channel dataset adapted to the type of the wireless channel is generated.

Optionally, the first wireless communication device cooperates with the second wireless communication device to generate the wireless channel dataset adapted to the type of the wireless channel, and the first wireless communication device is responsible for generating the wireless channel dataset adapted to the type of the wireless channel. Alternatively, the first wireless communication device and the second wireless communication device generate the wireless channel dataset adapted to the type of the wireless channel, and the second wireless communication device is responsible for generating the wireless channel dataset adapted to the type of the wireless channel.

Optionally, the wireless channel dataset adapted to the type of the wireless channel is generated according to the type of the wireless channel.

Optionally, a mathematical process is performed on an existing wireless channel dataset, to obtain the wireless channel dataset corresponding to the type of the wireless channel. Illustratively, the mathematical process includes, but is not limited to at least one of: Fast Fourier Transform (FFT) transform, Inverse Fast Fourier Transform (IFFT) transform, or Singular Value Decomposition (SVD) decomposition.

At operation 206, a machine learning model is updated according to the wireless channel dataset.

Optionally, the machine learning model is deployed on the first wireless communication device and/or the second wireless communication device. The machine learning model is applied to the first wireless communication device.

Optionally, the first wireless communication device cooperates with the second wireless communication device to update the machine learning model according to the wireless channel dataset, and the first wireless communication device is responsible for updating the machine learning model. Alternatively, the first wireless communication device cooperates with the second wireless communication device to update the machine learning model according to the wireless channel dataset, and the second wireless communication device is responsible for updating the machine learning model.

First, with reference to FIG. 4, an optional method for updating the machine learning model is illustrated. Taking the second wireless communication device used as a training device as an example, the second wireless communication device may collect Channel-State Information (CSI) of multiple first wireless communication devices as a real training set 41, for example, CSIs of multiple first wireless communication devices within the same geographical range may be used as the real training set 41. On one hand, a real training sample 42 in the real training set 41 is input to a channel discriminator D, and the channel discriminator D will output a corresponding discrimination result 45, that is, a first discrimination result. On the other hand, a random noise 43 is input to a channel generator G, the channel generator G will output a fake (supplementary) training sample 44, the fake training sample 44 is input to the channel discriminator D, and the channel discriminator D will output a corresponding discrimination result 45, that is, a second discrimination result. Then, the channel generator G and the channel discriminator D are trained based on a loss function 46 of the first discrimination result and the second discrimination result. It should be noted that the above method for updating the machine learning model may also be used in the first wireless communication device, which is only exemplarily described herein, and is not intended to limit the method for updating the machine learning model.

The machine learning model is used for at least one of: channel information feedback, channel estimation, positioning solution, beam management, mobility management (MM), radio resource management (RRM), or load balance solution. The channel estimation refers to a process of estimating model parameters of a channel model from channel data. The positioning solution is used for determining the position of the first wireless communication device. The mobility management refers to management of aspects of position information, security and service continuity of the first wireless communication device. The radio resource management refers to providing service quality guarantee for the second wireless communication device in the network in a condition that bandwidth of the second wireless communication device is limited. The load balance solution is used for balancing requests of the first wireless communication device, and distributing the requests of the first wireless communication device to multiple second wireless communication devices.

In summary, in the embodiment, the wireless channel dataset required to update the machine learning model is determined according to the type of the wireless channel. Therefore, adaptation and application of the wireless channel and the machine learning model in the wireless communication system according to requirements can be achieved, to avoid a problem of poor performance of a single machine learning model in multiple scenarios, and avoid costs of building, transmission and storage required to prepare multiple machine learning models in advance.

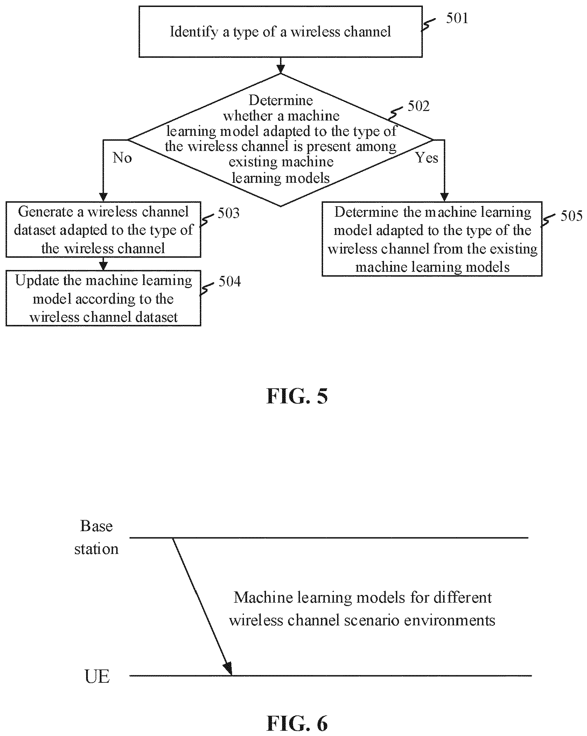

FIG. 5 shows a flowchart of a method for updating a model for processing a wireless channel provided in an exemplary embodiment of the disclosure. The embodiment is applied to the communication system shown in FIG. 1 as an example, and the method includes the following operations 501 to 505.

At operation 501, a type of a wireless channel is identified.

Specific contents may refer to the above operation 202, which will not be elaborated herein again.

At operation 502, it is determined whether a machine learning model adapted to the type of the wireless channel is present among existing machine learning models.

Optionally, the first wireless communication device determines whether the machine learning model adapted to the type of the wireless channel is present among existing machine learning models of the first wireless communication device. Alternatively, the second wireless communication device determines whether the machine learning model adapted to the type of the wireless channel is present among existing machine learning models of the second wireless communication device.

In case that the first wireless communication device determines whether the machine learning model adapted to the type of the wireless channel is present among existing machine learning models of the first wireless communication device, the following description is applied.

The existing machine learning models of the first wireless communication device are preconfigured by the first wireless communication device, or preconfigured by the second wireless communication device to the first wireless communication device, or preconfigured by a communication protocol.

Illustratively, as shown in FIG. 6, the base station configures machine learning models for different wireless channel scenario environments to the UE. Optionally, the base station configures the machine learning model to the UE according to the scenario feature of the wireless channel, and the scenario feature of the wireless channel includes at least one of: indoor environment/outdoor environment, dense residential area/open field, LOS/NLOS, or high speed/low speed. Optionally, the base station configures according to the index feature of the wireless channel, and the index feature includes at least one of: time domain feature information, frequency domain feature information, or spatial feature information. Illustratively, the index feature of the wireless channel includes, but is not limited to at least one of: delay power spectrum information, multipath information, angle information, or speed information.

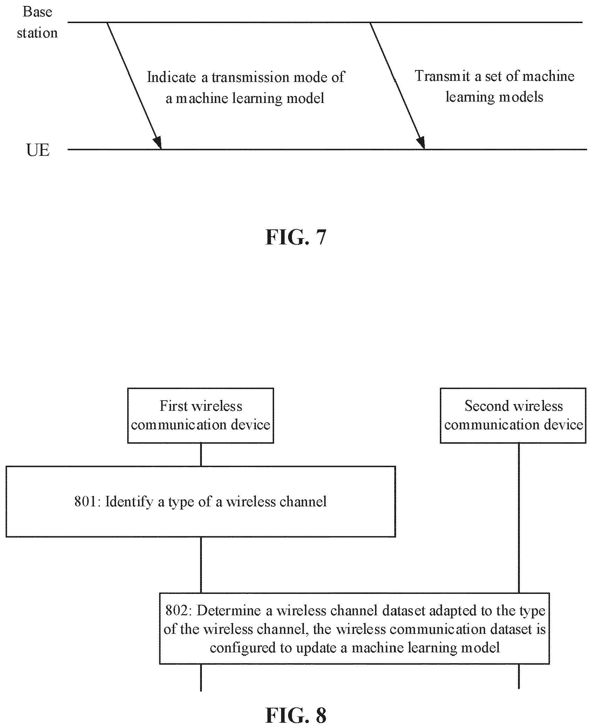

Optionally, the second wireless communication device preconfigures the machine learning model to the first wireless communication device through at least one of: downlink control signaling, or an MAC CE, or a RRC reconfiguration message, or a broadcast message, or data information carried on a downlink artificial intelligence-type data transmission channel, or transmission of data information carried on a downlink data channel. For example, the base station configures the machine learning model to the UE through an RRC message. Alternatively, the base station configures the machine learning model to the UE through the downlink control signaling in combination with downlink transmission, the downlink control signaling indicates a transmission mode for transmitting the above machine learning model, and downlink data transmission is configured to transmit the above machine learning model. Alternatively, the base station transmits the above machine learning model to the UE through the RRC message in combination with downlink data transmission, the RRC message indicates a transmission mode for transmitting the above machine learning model, and the downlink data transmission is configured to transmit the machine learning model. As shown in FIG. 7, after the base station indicates the transmission mode of the machine learning model to the UE, the base station transmits a set of machine learning models to the UE, and then the UE obtains the existing machine learning models.

In case that the second wireless communication device determines whether the machine learning model adapted to the type of the wireless channel is present among existing machine learning models of the second wireless communication device, the following description is applied.

The existing machine learning models of the second wireless communication device are preconfigured by the second wireless communication device, or preconfigured by a communication protocol. Optionally, the second wireless communication device preconfigures the machine learning model according to the scenario feature of the wireless channel; or, the second wireless communication device preconfigures the machine learning model according to the index feature of the wireless channel.

At operation 503, a wireless channel dataset adapted to the type of the wireless channel is generated.

Specific contents may refer to the above operation 204, which will not be elaborated herein again.

At operation 504, a machine learning model is updated according to the wireless channel dataset.

Specific contents may refer to the above operation 206, which will not be elaborated herein again.

At operation 505, the machine learning model adapted to the type of the wireless channel is determined from the existing machine learning models.

Optionally, the first wireless communication device determines the machine learning model matching the type of the wireless channel from the existing machine learning models of the first wireless communication device. Alternatively, the second wireless communication device determines the machine learning model matching the type of the wireless channel from the existing machine learning models of the second wireless communication device.

Illustratively, when the UE or the base station determines that the type of the wireless channel is an N-th category of the wireless channel, and the machine learning model adapted to the type of the wireless channel is present among the existing machine learning models, the UE or the base station directly uses the machine learning model corresponding to the type of the wireless channel; or, the UE or the base station directly updates the machine learning model corresponding to the type of the wireless channel.

In summary, in the embodiment, the wireless channel dataset required to update the machine learning model is determined according to the type of the wireless channel. Therefore, adaptation and application of the wireless channel and the machine learning model in the wireless communication system according to requirements can be achieved, to avoid a problem of poor performance of a single machine learning model in multiple scenarios, and avoid costs of building, transmission and storage required to prepare multiple machine learning models in advance.

FIG. 8 shows a flowchart of a method for updating a model for processing a wireless channel provided in an exemplary embodiment of the disclosure. The embodiment is applied to the communication system shown in FIG. 1 as an example. The method is carried out by the first wireless communication device, and the machine learning model is deployed on the first wireless communication device. Specific details of the embodiment may refer to embodiments as shown in FIG. 2 and FIG. 5, and the method includes the following operations 801 and 802.

At operation 801, the first wireless communication device identifies a type of the wireless channel.

At operation 802, the first wireless communication device determines a wireless channel dataset adapted to the type of the wireless channel, the wireless communication dataset is configured to update a machine learning model.

Optionally, the first wireless communication device generates the wireless channel dataset adapted to the type of the wireless channel, and the first wireless communication device updates the machine learning model according to the wireless channel dataset. Alternatively, the first wireless communication device generates the wireless channel dataset adapted to the type of the wireless channel, and the second wireless communication device updates the machine learning model according to the wireless channel dataset. Alternatively, the second wireless communication device generates the wireless channel dataset adapted to the type of the wireless channel, and the first wireless communication device updates the machine learning model according to the wireless channel dataset. Alternatively, the second wireless communication device generates the wireless channel dataset adapted to the type of the wireless channel, and the second wireless communication device updates the machine learning model according to the wireless channel dataset.

In summary, in the embodiment, the wireless channel dataset required to update the machine learning model is determined by the first wireless communication device cooperating with the second wireless communication device. Therefore, adaptation and application of the wireless channel and the machine learning model in the wireless communication system according to requirements can be achieved, to avoid a problem of poor performance of a single machine learning model in multiple scenarios, and avoid costs of building, transmission and storage required to prepare multiple machine learning models in advance.

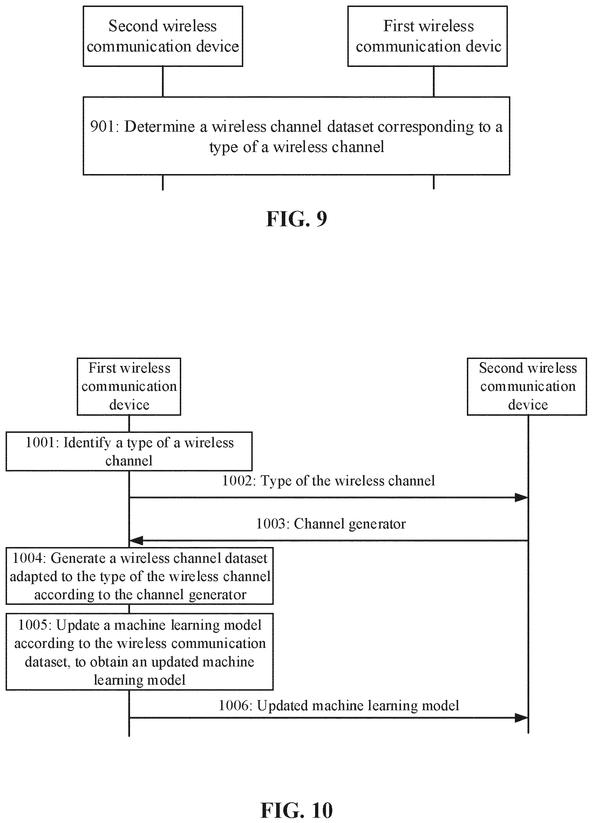

FIG. 9 shows a flowchart of a method for updating a model for processing a wireless channel provided in an exemplary embodiment of the disclosure. The embodiment is applied to the communication system shown in FIG. 1 as an example. The method is carried out by the second wireless communication device, and the machine learning model is deployed on the first wireless communication device. Specific details of the embodiment may refer to embodiments shown in FIG. 2 and FIG. 5, and the method includes the following operation 901.

At operation 901, the second wireless communication device determines a wireless channel dataset corresponding to a type of a wireless channel.

The type of the wireless channel is identified by a first wireless communication device, and the wireless communication dataset is configured to update a machine learning model.

In summary, in the embodiment, the wireless channel dataset required to update the machine learning model is determined according to the type of the wireless channel. Therefore, adaptation and application of the wireless channel and the machine learning model in the wireless communication system according to requirements can be achieved, to avoid a problem of poor performance of a single machine learning model in multiple scenarios, and avoid costs of building, transmission and storage required to prepare multiple machine learning models in advance.

FIG. 10 shows a flowchart of a method for updating a model for processing a wireless channel provided in an exemplary embodiment of the disclosure. The embodiment is applied to the communication system shown in FIG. 1 as an example, and specific details of the embodiment may refer to embodiments shown in FIG. 2 and FIG. 5, and the method includes the following operations 1001 to 1006.

At operation 1001, the first wireless communication device identifies a type of a wireless channel.

Specific contents may refer to the above operation 202, which will not be elaborated herein again.

At operation 1002, the first wireless communication device sends the type of the wireless channel to the second wireless communication device.

Optionally, the first wireless communication device may also send the scenario feature and/or the index feature to the second wireless communication device. Illustratively, the scenario feature includes, but is not limited to at least one of: indoor environment/outdoor environment, dense residential area/open field, LOS/NLOS, or high speed/low speed. Illustratively, the index feature includes at least one of: time domain feature information, frequency domain feature information, or spatial feature information. For example, the index feature includes, but is not limited to at least one of: delay power spectrum information, multipath information, angle information, or speed information.

Optionally, the first wireless communication device sends the type of the wireless channel to the second wireless communication device through uplink control signaling, or an RRC message, or uplink data transmission.

At operation 1003, the second wireless communication device configures a channel generator to the first wireless communication device according to the type of the wireless channel.

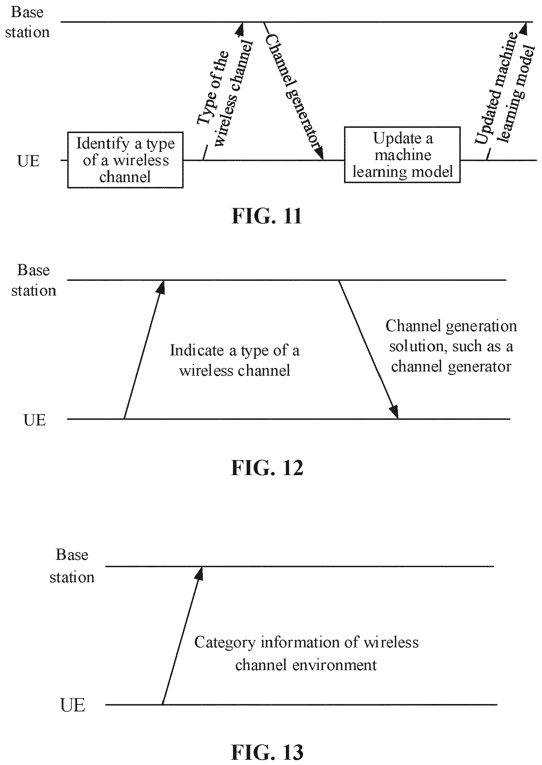

The channel generator is a channel generator, among multiple channel generators configured by the second wireless communication device, that corresponds to the type of the wireless channel. Alternatively, the channel generator is determined by the second wireless communication device according to the type of the wireless channel. The type of the wireless channel is sent by the first wireless communication device to the second wireless communication device. Illustratively, as shown in FIG. 12, the UE sends information indicating the category of the wireless channel to the base station, and the base station returns a channel generation solution to the UE, for example, the channel generation solution is the channel generator.

Optionally, the second wireless communication device configures the channel generator to the first wireless communication device through: downlink control signaling, or an MAC CE, or an RRC message, or a broadcast message, or data information carried on a downlink artificial intelligence-type data transmission channel, or downlink data transmission.

Illustratively, as shown in FIG. 13, the UE sends category information of the wireless channel environment to the base station, and the category information of the wireless channel environment is configured to indicate the type of the wireless channel. Optionally, the category information of the wireless channel environment further includes the scenario feature and/or the index feature. Illustratively, the scenario feature includes, but is not limited to at least one of: indoor environment/outdoor environment, dense residential area/open field, LOS/NLOS, or high speed/low speed. Optionally, the index feature includes at least one of: time domain feature information, frequency domain feature information, or spatial feature information. Illustratively, the index feature may further include at least one of: delay power spectrum information, multipath information, angle information, or speed information.

At operation 1004, the first wireless communication device generates a wireless channel dataset adapted to the type of the wireless channel according to the channel generator.

Optionally, the first wireless communication device generates the wireless channel dataset corresponding to the type of the wireless channel according to the channel generator.

Optionally, the first wireless communication device performs mathematical process on the existing wireless channel dataset according to the channel generator, to obtain the wireless channel dataset corresponding to the type of the wireless channel.

At operation 1005, the first wireless communication device updates a machine learning model according to the wireless communication dataset, to obtain an updated machine learning model.

Optionally, the first wireless communication device performs secondary training on the machine learning model according to the wireless communication dataset, to obtain the updated machine learning model. Alternatively, the first wireless communication device retrains an initialized machine learning model according to the wireless communication dataset, to obtain the updated machine learning model.

In a specific implementation, the UE updates a channel information feedback solution according to the wireless communication dataset, and the channel information feedback solution is at least one of: an algorithm, an Al solution or a machine learning model used for achieving channel information feedback. In a specific implementation, the UE updates a channel estimation solution according to the wireless communication dataset, and the channel estimation solution is at least one of: an algorithm, an AI solution or a machine learning model used for achieving channel estimation. In a specific implementation, the UE updates a positioning solution according to the wireless communication dataset, and the positioning solution is at least one of: an algorithm, an AI solution or a machine learning model used for achieving positioning. In a specific implementation, the UE updates a beam management solution according to the wireless communication dataset, and the beam management solution is at least one of: an algorithm, an AI solution or a machine learning model used for achieving beam management. In a specific implementation, the UE or the base station updates a mobility management solution according to the wireless communication dataset, and the mobility management solution is at least one of: an algorithm, an AI solution or a machine learning model used for achieving mobility management. In a specific implementation, the UE updates a radio resource management and load balance solution according to the wireless communication dataset, and the radio resource management and load balance solution is at least one of: an algorithm, an AI solution or a machine learning model used for achieving radio resource management and load balance.

At operation 1006, the first wireless communication device sends the updated machine learning model to the second wireless communication device.

Optionally, the first wireless communication device sends the machine learning model updated by the first wireless communication device to the second wireless communication device, and the updated machine learning model may be one or more types of machine learning models. The machine learning model is used for at least one of: channel information feedback, channel estimation, positioning solution, beam management, mobility management, radio resource management, or load balance solution. Optionally, the first wireless communication device sends a subdivision identifier corresponding to the updated machine learning model of the first wireless communication device to the second wireless communication device, and the subdivision identifier is configured to represent a specific identifier associated with a certain type of machine model. For example, with regard to a machine learning model for a channel information feedback type, an M-th machine learning model for channel information feedback may be indicated by the subdivision identifier, and the M-th machine learning model for channel information feedback corresponds to the type of wireless channel.

Optionally, the first wireless communication device sends a machine learning model required to be updated by the second wireless communication device to the second wireless communication device, and the machine learning model required to be updated may be one or more types of machine learning models. Optionally, the first wireless communication device sends a subdivision identifier corresponding to the machine learning model required to be updated by the second wireless communication device to the second wireless communication device.

Optionally, the first wireless communication device sends update information for indicating the wireless channel and/or the category of the wireless channel to the second wireless communication device, and the update information is configured to instruct the second wireless communication device to update the machine learning model.

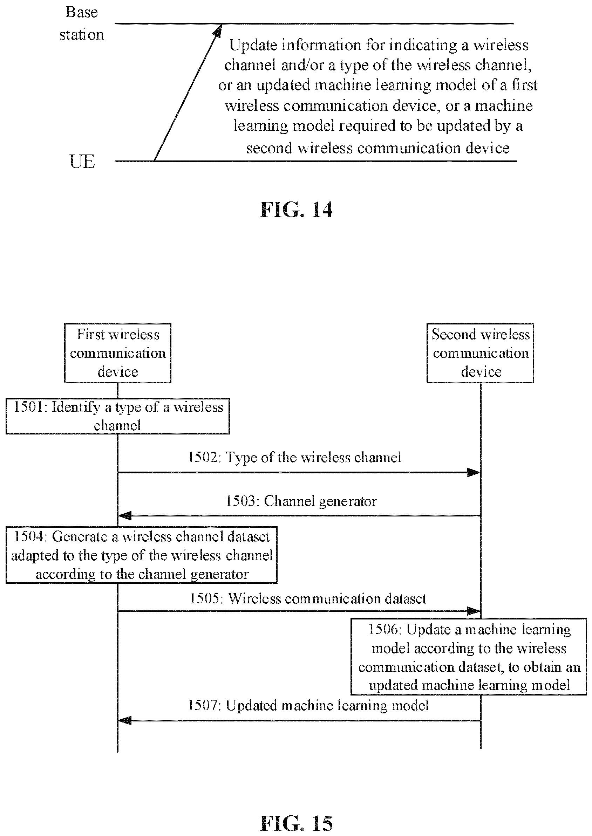

Illustratively, as shown in FIG. 14, the UE sends update information for indicating the wireless channel and/or the category of the wireless channel, or a machine learning model updated by the first wireless communication device, or a machine learning model required to be updated by the second wireless communication device to the base station.

It should be noted that the operation 1006 is an optional operation.

The above operations 1002 to 1005 are applicable to a situation where the machine learning model adapted to the type of the wireless channel is not present among existing machine learning models of the first wireless communication device. The whole process of the embodiment may be shown with reference to FIG. 11.

When the machine learning model adapted to the type of the wireless channel is not present among the existing machine learning models of the first wireless communication device, the following operation is performed. The first wireless communication device determines the machine learning model corresponding to the type of the wireless channel from the existing machine learning models.

In summary, in the embodiment, the wireless channel dataset required to update the machine learning model is determined according to the type of the wireless channel. Therefore, adaptation and application of the wireless channel and the machine learning model in the wireless communication system according to requirements can be achieved, to avoid a problem of poor performance of a single machine learning model in multiple scenarios, and avoid costs of building, transmission and storage required to prepare multiple machine learning models in advance. Determination of the wireless channel dataset and updating of the machine learning model are performed on the first wireless communication device, which can reduce computing pressure of the second wireless communication device.

FIG. 15 shows a flowchart of a method for updating a model for processing a wireless channel provided in an exemplary embodiment of the disclosure. The embodiment is applied to the communication system shown in FIG. 1 as an example, and specific details of the embodiment may refer to embodiments shown in FIG. 2 and FIG. 5, and the method includes the following operations 1501 to 1507.

At operation 1501, a first wireless communication device identifies a type of a wireless channel.

Specific contents may refer to the above operation 202, which will not be elaborated herein again.

At operation 1502, the first wireless communication device sends the type of the wireless channel to a second wireless communication device.

At operation 1503, the second wireless communication device configures a channel generator to the first wireless communication device according to the type of the wireless channel.

At operation 1504, the first wireless communication device generates a wireless channel dataset adapted to the type of the wireless channel according to the channel generator.

The above operations 1501 to 1504 may refer to the above operations 1001 to 1004.

At operation 1505, the first wireless communication device sends the wireless communication dataset to the second wireless communication device.

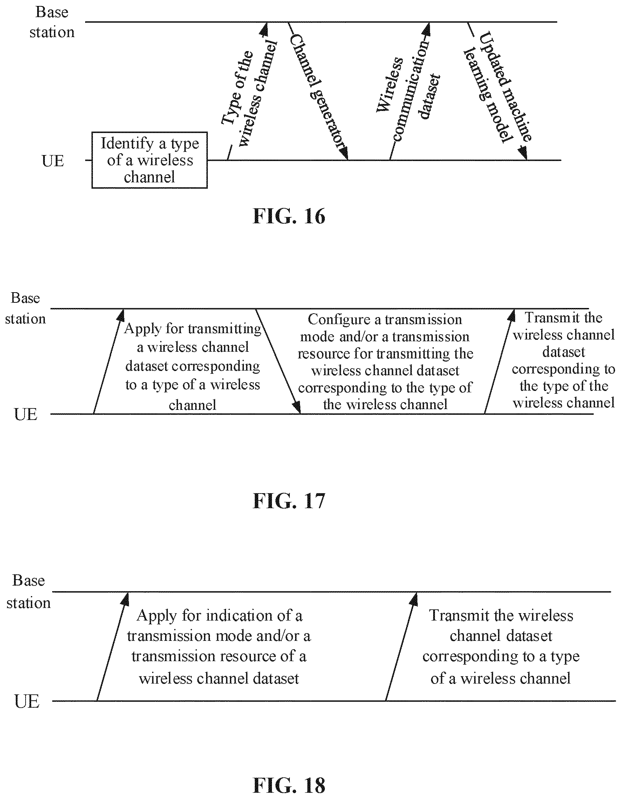

In an optional implementation, the first wireless communication device applies for transmitting the wireless communication dataset to the second wireless communication device, the second wireless communication device performs configuration for the first wireless communication device, and the first wireless communication device transmits the wireless channel dataset to the second wireless communication device accordingly. Illustratively, as shown in FIG. 17, the UE applies for transmitting the wireless communication dataset corresponding to the type of the wireless channel to the base station, the base station configures a transmission mode and/or a transmission resource for transmitting the wireless communication dataset corresponding to the type of the wireless channel to the UE device, and the UE transmits the wireless channel dataset corresponding to the type of the wireless channel to the base station according to the transmission mode and/or the transmission resource.

In an optional implementation, the first wireless communication device sends a scheduling request to the second wireless communication device, the first wireless communication device receives first downlink signaling sent by the second wireless communication device, and the first downlink signaling is configured to indicate the transmission mode and/or the transmission resource of the wireless channel dataset. The first wireless communication device sends, according to the first downlink signaling, the wireless channel dataset to the second wireless communication device. The transmission resource includes time domain resource and frequency domain resource, and the transmission mode is a large-scale and highly error-tolerant transmission mode for transmitting the wireless channel dataset. For example, the transmission mode may not be verified by Cyclic Redundancy Check (CRC), or may not use a Hybrid Automatic Repeat reQuest (HARQ) mechanism. Illustratively, as shown in FIG. 18, the UE applies for indication of the transmission mode and/or the transmission resource of the wireless channel dataset to the base station, the base station configures the transmission mode and/or the transmission resource of the wireless channel dataset to the UE, and the UE sends the wireless channel dataset to the base station according to the transmission mode and/or the transmission resource.

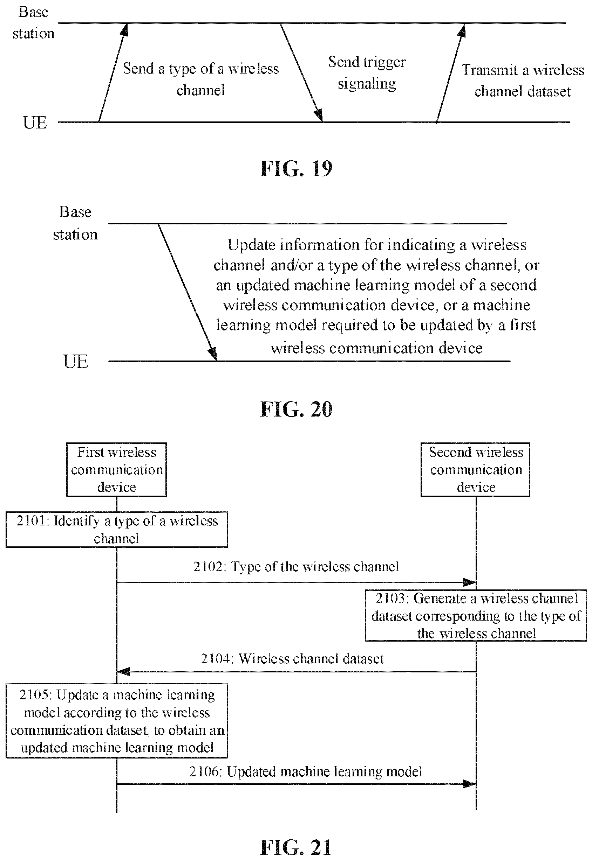

In an optional implementation, the first wireless communication device sends the type of the wireless channel to the second wireless communication device, the second wireless communication device sends trigger signaling to the first wireless communication device according to the type of the wireless channel, and the first wireless communication device sends, according to the trigger signaling, the wireless channel dataset to the second wireless communication device. Illustratively, as shown in FIG. 19, before the UE transmits the wireless channel dataset to the base station, the UE may send the type of the wireless channel to the base station, the base station sends trigger signaling to the UE according to the type of the wireless channel, and then the UE transmits the wireless channel dataset to the base station.

At operation 1506, the second wireless communication device updates a machine learning model according to the wireless communication dataset, to obtain an updated machine learning model.

Optionally, the second wireless communication device performs secondary training on the machine learning model according to the wireless communication dataset, to obtain the updated machine learning model. Alternatively, the first wireless communication device retrains an initialized machine learning model according to the wireless communication dataset, to obtain the updated machine learning model.

In a specific implementation, the base station updates a channel information feedback solution according to the wireless communication dataset, and the channel information feedback solution is at least one of an algorithm, an AI solution or a machine learning model used for achieving channel information feedback. In a specific implementation, the base station updates a channel estimation solution according to the wireless communication dataset, and the channel estimation solution is at least one of an algorithm, an AI solution or a machine learning model used for achieving channel estimation. In a specific implementation, the base station updates a positioning solution according to the wireless communication dataset, and the positioning solution is at least one of an algorithm, an AI solution or a machine learning model used for achieving positioning. In a specific implementation, the base station updates a beam management solution according to the wireless communication dataset, and the beam management solution is at least one of an algorithm, an AI solution or a machine learning model used for achieving beam management. In a specific implementation, the base station updates a mobility management solution according to the wireless communication dataset, and the mobility management solution is at least one of an algorithm, an AI solution or a machine learning model used for achieving mobility management. In a specific implementation, the base station updates radio resource management and load balance solution according to the wireless communication dataset, and the radio resource management and load balance solution is at least one of an algorithm, an AI solution or a machine learning model used for achieving radio resource management and load balance.

At operation 1507, the second wireless communication device sends the updated machine learning model to the first wireless communication device.

Optionally, the second wireless communication device sends the machine learning model updated by the second wireless communication device to the first wireless communication device, and the updated machine learning model may be one or more types of machine learning models. Optionally, the second wireless communication device sends a subdivision identifier corresponding to the updated machine learning model of the second wireless communication device to the first wireless communication device. Optionally, the second wireless communication device sends a machine learning model required to be updated by the first wireless communication device to the first wireless communication device, and the machine learning model required to be updated may be one or more types of machine learning models. Optionally, the second wireless communication device sends a subdivision identifier corresponding to the machine learning model required to be updated by the first wireless communication device to the first wireless communication device. Optionally, the second wireless communication device sends update information for indicating the wireless channel and/or the category of the wireless channel to the first wireless communication device. Illustratively, as shown in FIG. 20, the base station sends update information for indicating the wireless channel and/or the category of the wireless channel, or a machine learning model updated by the second wireless communication device, or a machine learning model required to be updated by the first wireless communication device to the UE.

The above operations 1502 to 1505 are applicable to a situation where the machine learning model adapted to the type of the wireless channel is not present among existing machine learning models of the second wireless communication device. The whole process of the embodiment may be shown with reference to FIG. 16.

When the machine learning model adapted to the type of the wireless channel is not present among the existing machine learning models of the second wireless communication device, the following operation is performed. The second wireless communication device determines the machine learning model corresponding to the type of the wireless channel from the existing machine learning models.

In summary, in the embodiment, the wireless channel dataset required to update the machine learning model is determined through the first wireless communication device cooperating with the second wireless communication device. Therefore, adaptation and application of the wireless channel and the machine learning model in the wireless communication system according to requirements can be achieved, to avoid a problem of poor performance of a single machine learning model in multiple scenarios, and avoid costs of building, transmission and storage required to prepare multiple machine learning models in advance. There is a one-to-multiple relationship between the second wireless communication device and the first wireless communication device. In order to reduce calculation amount of the second wireless communication device, determination of the wireless channel dataset is achieved on the first wireless communication device. Considering limited calculation capability of the first wireless communication device, the process of updating the machine learning model is performed on the second wireless communication device.

FIG. 21 shows a flowchart of a method for updating a model for processing a wireless channel provided in an exemplary embodiment of the disclosure. The embodiment is applied to the communication system shown in FIG. 1 as an example, and specific details of the embodiment may refer to embodiments shown in FIG. 2 and FIG. 5, and the method includes the following operations 2101 to 2106.

At operation 2101, a first wireless communication device identifies a type of a wireless channel.

Specific contents may refer to the above operation 202, which will not be elaborated herein again.

At operation 2102, the first wireless communication device sends the type of the wireless channel to a second wireless communication device.

At operation 2103, the second wireless communication device generates a wireless channel dataset corresponding to the type of the wireless channel.

Optionally, the second wireless communication device generates the wireless channel dataset corresponding to the type of the wireless channel according to the type of the wireless channel.

Optionally, the second wireless communication device performs mathematical process on the existing wireless channel dataset according to the type of the wireless channel, to obtain the wireless channel dataset corresponding to the type of the wireless channel.

At operation 2104, the second wireless communication device sends the wireless channel dataset to the first wireless communication device.

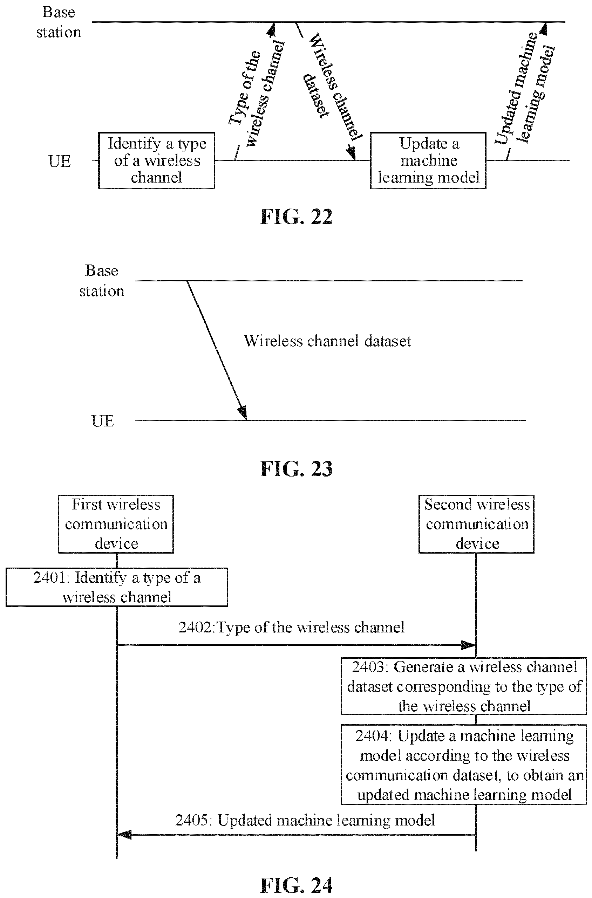

Optionally, the second wireless communication device transmits the generated wireless channel dataset to the first wireless communication device through an RRC reconfiguration message, or broadcast or multicast downlink transmission, or downlink data transmission. Illustratively, as shown in FIG. 23, the base station transmits the generated wireless channel dataset to the UE.

Illustratively, as shown in FIG. 8, the UE sends update information for indicating the wireless channel and/or the category of the wireless channel, or a machine learning model updated by the first wireless communication device, or a machine learning model required to be updated by the second wireless communication device to the base station.

At operation 2105, the first wireless communication device updates a machine learning model according to the wireless communication dataset, to obtain an updated machine learning model.

At operation 2106, the first wireless communication device sends the updated machine learning model to the second wireless communication device.

It should be noted that the operation 2106 is an optional operation. The whole process of the embodiment may be shown with reference to FIG. 22.

The above operations 2102 to 2105 are applicable to a situation where the machine learning model adapted to the type of the wireless channel is not present among existing machine learning models of the second wireless communication device.

When the machine learning model adapted to the type of the wireless channel is not present among the existing machine learning models of the first wireless communication device, the following operation is performed. The first wireless communication device determines the machine learning model corresponding to the type of the wireless channel from the existing machine learning models.

In summary, in the embodiment, the wireless channel dataset required to update the machine learning model is determined according to the type of the wireless channel. Therefore, adaptation and application of the wireless channel and the machine learning model in the wireless communication system according to requirements can be achieved, to avoid a problem of poor performance of a single machine learning model in multiple scenarios, and avoid costs of building, transmission and storage required to prepare multiple machine learning models in advance. Considering limited calculation capability of the first wireless communication device, determination of the wireless channel dataset is achieved on the second wireless communication device. Moreover, there is a one-to-multiple relationship between the second wireless communication device and the first wireless communication device, in order to reduce calculation amount of the second wireless communication device, the process of updating the machine learning model is performed on the first wireless communication device.

FIG. 24 shows a flowchart of a method for updating a model for processing a wireless channel provided in an exemplary embodiment of the disclosure. The embodiment is applied to the communication system shown in FIG. 1 as an example, and specific details of the embodiment may refer to embodiments shown in FIG. 2 and FIG. 5, and the method includes the following operations 2401 to 2405.

At operation 2401, a first wireless communication device identifies a type of a wireless channel.

Specific contents may refer to the above operation 202, which will not be elaborated herein again.

At operation 2402, the first wireless communication device sends the type of the wireless channel to a second wireless communication device.

Optionally, the first wireless communication device may also send a scenario feature and/or an index feature to the second wireless communication device.

Optionally, the first wireless communication device sends the type of the wireless channel to the second wireless communication device by using uplink control signaling, or an RRC message, or uplink data transmission.

At operation 2403, the second wireless communication device generates a wireless channel dataset corresponding to the type of the wireless channel.

Optionally, the second wireless communication device generates the wireless channel dataset corresponding to the type of the wireless channel according to the type of the wireless channel.

Optionally, the second wireless communication device performs mathematical process on the existing wireless channel dataset according to the type of the wireless channel, to obtain the wireless channel dataset corresponding to the type of the wireless channel.

At operation 2404, the second wireless communication device updates a machine learning model according to the wireless communication dataset, to obtain an updated machine learning model.

Optionally, the second wireless communication device performs secondary training on the machine learning model according to the wireless communication dataset, to obtain the updated machine learning model. Alternatively, the second wireless communication device retrains an initialized machine learning model according to the wireless communication dataset, to obtain the updated machine learning model.

At operation 2405, the second wireless communication device sends the updated machine learning model to the first wireless communication device.

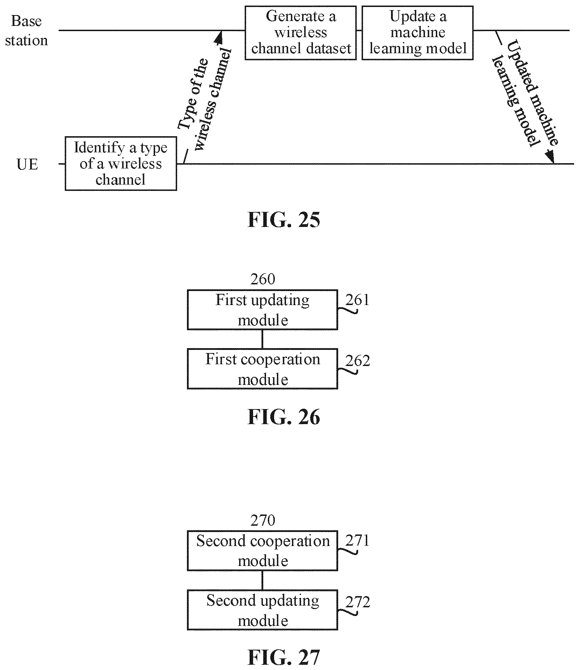

The above operations 2402 to 2405 are applicable to a situation where the machine learning model adapted to the type of the wireless channel is not present among existing machine learning models of the second wireless communication device. The whole process of the embodiment may be shown with reference to FIG. 25.

When the machine learning model adapted to the type of the wireless channel is not present among the existing machine learning models of the second wireless communication device, the following operation is performed. The second wireless communication device determines the machine learning model corresponding to the type of the wireless channel from the existing machine learning models.

In summary, in the embodiment, the wireless channel dataset required to update the machine learning model is determined according to the type of the wireless channel. Therefore, adaptation and application of the wireless channel and the machine learning model in the wireless communication system according to requirements can be achieved, to avoid a problem of poor performance of a single machine learning model in multiple scenarios, and avoid costs of building, transmission and storage required to prepare multiple machine learning models in advance. The process of determination of the wireless channel dataset and updating of the machine learning model are performed on the second wireless communication device, which can reduce computing pressure of the first wireless communication device.

FIG. 26 shows a block diagram of a first wireless communication apparatus shown provided in an exemplary embodiment of the disclosure. The apparatus 260 includes a first updating module 261 and a first cooperation module 262.

The first updating module is configured to identify a type of a wireless channel.

The first cooperation module is configured to determine a wireless channel dataset adapted to the type of the wireless channel. The wireless communication dataset is configured to update a machine learning model.

In an optional design of the disclosure, the first cooperation module 262 is further configured to receive a channel generator configured by a second wireless communication apparatus.

The first updating module 261 is further configured to generate the wireless channel dataset adapted to the type of the wireless channel according to the channel generator.

In an optional design of the disclosure, the channel generator is channel generator, among multiple channel generators configured by the second wireless communication apparatus, that corresponds to the type of the wireless channel; or, the channel generator is determined by the second wireless communication apparatus according to the type of the wireless channel. The type of the wireless channel is sent by the first wireless communication apparatus to the second wireless communication apparatus.

In an optional design of the disclosure, the first updating module 261 is further configured to update the machine learning model according to the wireless communication dataset, to obtain an updated machine learning model.

In an optional design of the disclosure, the first cooperation module 262 is further configured to send the updated machine learning model to the second wireless communication apparatus.

In an optional design of the disclosure, the first cooperation module 262 is further configured to send the wireless communication dataset to the second wireless communication apparatus. The first cooperation module 262 is further configured to receive an updated machine learning model sent by the second wireless communication apparatus, and the updated machine learning model is obtained by updating the machine learning model by the second wireless communication apparatus according to the wireless communication dataset.

In an optional design of the disclosure, the first cooperation module 262 is further configured to send a scheduling request to the second wireless communication apparatus. The first cooperation module 262 is further configured to receive first downlink signaling sent by the second wireless communication apparatus, the first downlink signaling is configured to indicate a transmission mode and/or a transmission resource of the wireless channel dataset. The first cooperation module 262 is further configured to send, according to the first downlink signaling, the wireless channel dataset to the second wireless communication apparatus.

In an optional design of the disclosure, the first cooperation module 262 is further configured to send the type of the wireless channel to the second wireless communication apparatus. The first cooperation module 262 is further configured to receive trigger signaling provided by the second wireless communication apparatus, the trigger signaling is sent by the second wireless communication apparatus based on the type of the wireless channel. The first cooperation module 262 is further configured to send, according to the trigger signaling, the wireless channel dataset to the second wireless communication apparatus.

In an optional design of the disclosure, the first cooperation module 262 is further configured to send the type of the wireless channel to the second wireless communication apparatus, the type of the wireless channel is used for the second communication device to generate the wireless channel dataset. The first cooperation module 262 is further configured to receive the wireless channel dataset sent by the second wireless communication apparatus.

In an optional design of the disclosure, the first updating module 261 is further configured to update the machine learning model according to the wireless communication dataset, to obtain an updated machine learning model.

In an optional design of the disclosure, the first cooperation module 262 is further configured to receive second downlink signaling sent by the second wireless communication apparatus, the second downlink signaling is configured to indicate a transmission mode and/or a transmission resource of the wireless channel dataset. The first cooperation module 262 is further configured to receive, according to the second downlink signaling, the wireless communication dataset sent by the second wireless communication apparatus.

In an optional design of the disclosure, the first updating module 261 is further configured to update the machine learning model according to the wireless communication dataset, to obtain the updated machine learning model.

In an optional design of the disclosure, a type division mode of the wireless channel is defined by at least one of: the type division mode of the wireless channel predefined by a communication protocol; the type division mode of the wireless channel predefined by the first wireless communication apparatus; or, the type division mode of the wireless channel configured by a second wireless communication apparatus to the first wireless communication apparatus.

In an optional design of the disclosure, the first updating module 261 is further configured to identify the type of the wireless channel through a channel category discrimination model.

In an optional design of the disclosure, an output of the channel category discrimination model includes at least one of: a category identifier of the wireless channel, a category scenario identifier of the wireless channel, or an index category identifier of the wireless channel.

In an optional design of the disclosure, the first cooperation module 262 is further configured to receive a channel category discrimination model configured by a second wireless communication apparatus.

In an optional design of the disclosure, the channel category discrimination model is configured by at least one of: downlink control signaling, an MAC CE, an RRC reconfiguration message, a broadcast message, data information carried on a downlink artificial intelligence-type data transmission channel, or data information carried on a downlink data channel.

In an optional design of the disclosure, in case that the machine learning model adapted to the type of the wireless channel is not present among existing machine learning models of the apparatus, the first cooperation module 262 is further configured to generate the wireless channel dataset adapted to the type of the wireless channel by cooperating with the second wireless communication apparatus. The wireless communication dataset is configured to update the machine learning model.

In an optional design of the disclosure, in case that the machine learning model adapted to the type of the wireless channel is present among the existing machine learning models of the first wireless communication apparatus, the first cooperation module 262 is further configured to determine the machine learning model corresponding to the type of the wireless channel from the existing machine learning models.

In an optional design of the disclosure, the existing machine learning models are stored in the first wireless communication apparatus.

In an optional design of the disclosure, the existing machine learning models are provided by the second wireless communication apparatus to the first wireless communication apparatus.

In an optional design of the disclosure, the machine learning model is used for at least one of: channel information feedback, channel estimation, positioning solution, beam management, mobility management, radio resource management, or load balance solution.

In summary, in the embodiment, the wireless channel dataset required to update the machine learning model is determined according to the type of the wireless channel. Therefore, adaptation and application of the wireless channel and the machine learning model in the wireless communication system according to requirements can be achieved, to avoid a problem of poor performance of a single machine learning model in multiple scenarios, and avoid costs of building, transmission and storage required to prepare multiple machine learning models in advance.

FIG. 27 shows a block diagram of a second wireless communication apparatus shown provided in an exemplary embodiment of the disclosure. The apparatus 270 includes a second cooperation module 271.

The second cooperation module is configured to determine a wireless channel dataset corresponding to a type of a wireless channel. The type of the wireless channel is identified by a first wireless communication apparatus, and the wireless communication dataset is configured to update a machine learning model.

In an optional design of the disclosure, the second cooperation module 271 is further configured to receive the type of the wireless channel provided by the first wireless communication apparatus. The second cooperation module 271 is further configured to configure a channel generator to the first wireless communication apparatus according to the type of the wireless channel. The wireless channel dataset is generated by the first wireless communication apparatus according to the channel generator, and the channel generator is used for the first wireless communication device to generate the wireless channel dataset, the second wireless communication device receives the wireless communication dataset sent by the first wireless communication device.

In an optional design of the disclosure, the second cooperation module 271 is further configured to configure multiple channel generators to the first wireless communication apparatus. The channel generator corresponding to the type of the wireless channel is present among multiple channel generators.

In an optional design of the disclosure, the second cooperation module 271 is further configured to receive a scheduling request sent by the first wireless communication apparatus, the second cooperation module 271 is further configured to send first downlink signaling to the first wireless communication apparatus. The first downlink signaling is configured to indicate a transmission mode and/or a transmission resource of the wireless channel dataset. The second cooperation module 271 is further configured to receive the wireless channel dataset sent by the first wireless communication apparatus, and the wireless channel dataset is sent by the first wireless communication apparatus to the second wireless communication apparatus according to the first downlink signaling.

In an optional design of the disclosure, the second cooperation module 271 is further configured to send, based on the type of the wireless channel, trigger signaling to the first wireless communication apparatus. The second cooperation module 271 is further configured to receive the wireless channel dataset sent by the first wireless communication apparatus, and the wireless channel dataset is sent by the first wireless communication apparatus according to the trigger signaling.

In an optional design of the disclosure, a second updating module 272 is configured to update the machine learning model according to the wireless communication dataset, to obtain an updated machine learning model.

In an optional design of the disclosure, the second cooperation module 271 is further configured to receive the type of the wireless channel sent by the first wireless communication apparatus, the second updating module 272 is further configured to generate the wireless channel dataset corresponding to the type of the wireless channel.

In an optional design of the disclosure, the second cooperation module 271 is further configured to send the wireless channel dataset to the first wireless communication apparatus. The wireless communication dataset is used for the first wireless communication device to update the machine learning model, to obtain an updated machine learning model.

In an optional design of the disclosure, the second cooperation module 271 is further configured to send second downlink signaling to the first wireless communication apparatus, the second downlink signaling is configured to indicate a transmission mode and/or a transmission resource of the wireless channel dataset. The second cooperation module 271 is further configured to send the wireless channel dataset to the first wireless communication apparatus through the transmission mode and/or the transmission resource, and the wireless channel dataset is used for the first wireless communication device to update the machine learning model.

In an optional design of the disclosure, the second updating module 272 is further configured to update the machine learning model according to the wireless communication dataset, to obtain an updated machine learning model. The second cooperation module 271 is further configured to send the updated machine learning model to the first wireless communication apparatus.

In an optional design of the disclosure, a type division mode of the wireless channel is defined by at least one of: the type division mode of the wireless channel predefined by a communication protocol; the type division mode of the wireless channel predefined by the first wireless communication apparatus; or, the type division mode of the wireless channel configured by a second wireless communication apparatus to the first wireless communication apparatus.

In an optional design of the disclosure, the type of the wireless channel is identified by the first wireless communication apparatus through a channel category discrimination model.

In an optional design of the disclosure, an output of the channel category discrimination model includes at least one of: a category identifier of the wireless channel, a category scenario identifier of the wireless channel, or an index category identifier of the wireless channel.

In an optional design of the disclosure, the second cooperation module 271 is further configured to configure the channel category discrimination model to the first wireless communication apparatus.

In an optional design of the disclosure, the channel category discrimination model is configured by at least one of: downlink control signaling, an MAC CE, an RRC reconfiguration message, a broadcast message, data information carried on a downlink artificial intelligence-type data transmission channel, or data information carried on a downlink data channel.

In an optional design of the disclosure, in case that a machine learning model adapted to the type of the wireless channel is not present among existing machine learning models of the apparatus, the second cooperation module 271 is further configured to generate the wireless channel dataset corresponding to the type of the wireless channel by cooperating with the first wireless communication apparatus. The wireless communication dataset is configured to update the machine learning model.

In an optional design of the disclosure, in case that the machine learning model adapted to the type of the wireless channel is present among the existing machine learning models of the second wireless communication apparatus, the second cooperation module 271 is further configured to determine the machine learning model corresponding to the type of the wireless channel from the existing machine learning models.

In an optional design of the disclosure, the existing machine learning models are stored in the second wireless communication apparatus.

In an optional design of the disclosure, the existing machine learning models are provided by the first wireless communication apparatus to the second wireless communication apparatus.

In an optional design of the disclosure, the machine learning model is used for at least one of: channel information feedback, channel estimation, positioning solution, beam management, mobility management, radio resource management, or load balance solution.

In summary, in the embodiment, the wireless channel dataset required to update the machine learning model is determined according to the type of the wireless channel. Therefore, adaptation and application of the wireless channel and the machine learning model in the wireless communication system according to requirements can be achieved, to avoid a problem of poor performance of a single machine learning model in multiple scenarios, and avoid costs of building, transmission and storage required to prepare multiple machine learning models in advance.

It should be noted that when the apparatuses provided in the above embodiments implement functions thereof, division of the above functional modules is exemplified only. In actual applications, the above functions may be allocated and completed by different functional modules according to actual requirements. That is, content structures of the device are divided into different functional modules to complete all or part of the above functions.

With regard to the apparatuses in the above embodiments, specific modes of each module performing operations have been described in detail in the embodiments related to the method, which are not be described in detail herein.

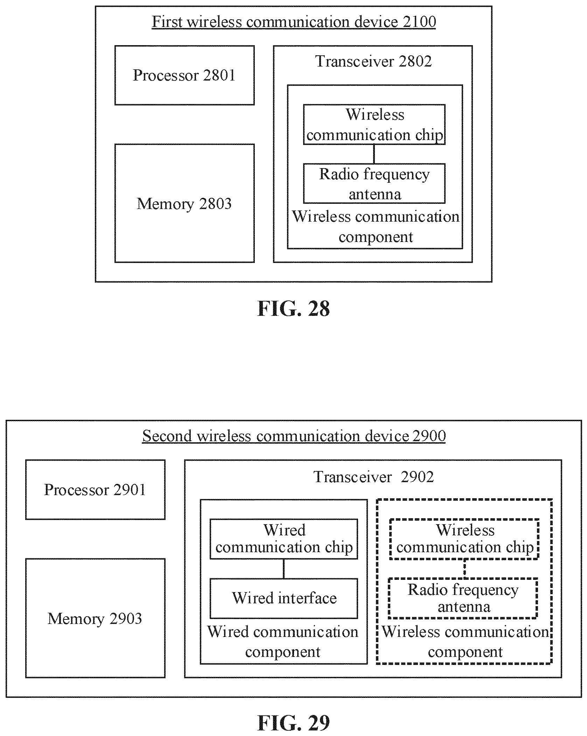

With reference to FIG. 28, it is illustrated a schematic structural diagram of a first wireless communication device 2800 provided in an embodiment of the disclosure. The first wireless communication device 2800 may include a processor 2801, a transceiver 2802 and a memory 2803.

The processor 2801 includes one or more processing cores, and the processor 2801 executes various functional applications and information processing by running software programs and modules.

The transceiver 2802 may include a receiver and a transmitter. For example, the receiver and the transmitter may be implemented as one wireless communication component, and the wireless communication component may include a wireless communication chip and a radio frequency (RF) antenna.

The memory 2803 may be connected to the processor 2801 and the transceiver 2802.

The memory 2803 may be configured to store a computer program executable by the processor, and the processor 2801 is configured to execute the computer program to implement various operations performed by the first wireless communication device of the wireless communication system in the above method embodiments.

Furthermore, the memory 2803 may be implemented by any type of volatile or non-volatile storage device or combination thereof. The volatile or non-volatile storage device includes but is not limited to: a magnetic disk or an optical disk, an Electrically Erasable Programmable Read Only Memory (EEPROM), an Erasable Programmable Read Only Memory (EPROM), a static random access memory, a Read Only Memory (ROM), a magnetic memory, a flash memory, a Programmable Read Only Memory (PROM).

The process performed by the first wireless communication device 2800 may refer to various operations in the above methods performed by the first wireless communication device as shown in FIG. 2, FIG. 5, FIG. 8, FIG. 9, FIG. 10, FIG. 15, FIG. 21 and FIG. 24.

With reference to FIG. 29, it is illustrated a schematic structural diagram of a second wireless communication device 2900 provided in an embodiment of the disclosure. The second wireless communication device 2900 may include a processor 2901, a transceiver 2902 and a memory 2903.

The processor 2901 includes one or more processing cores, and the processor 2901 executes various functional applications and information processing by running software programs and modules.

The transceiver 2902 may include a receiver and a transmitter. For example, the transceiver 2902 may include a wired communication component, and the wired communication component may include a wired communication chip and a wired interface (such as an optical fiber interface). Optionally, the transceiver 2902 may further include a wireless communication component, and the wireless communication component may include a wireless communication chip and an RF antenna.

The memory 2903 may be connected to the processor 2901 and the transceiver 2902.

The memory 2903 may be configured to store a computer program executable by the processor, and the processor 2901 is configured to execute the computer program to implement various operations of the wireless communication system in the above method embodiments.

Furthermore, the memory 2903 may be implemented by any type of volatile or non-volatile storage device or combination thereof. The volatile or non-volatile storage device includes but is not limited to: a magnetic disk or an optical disk, an EEPROM, an EPROM, a static anytime access memory, an ROM, a magnetic memory, a flash memory, a PROM.

An embodiment of the disclosure further provides a computer-readable storage medium, a computer program is stored on the storage medium, and the computer program is loaded and executed by a processor, to implement various operations in the above methods performed by the first wireless communication device or the second wireless communication device as shown in FIG. 2, FIG. 5, FIG. 8, FIG. 9, FIG. 10, FIG. 15, FIG. 21 and FIG. 24.

The disclosure further provides a computer program product, the computer program product includes computer instructions stored in a computer-readable storage medium. A processor of a computer device reads the computer instructions from the computer-readable storage medium, and the processor executes the computer instructions, to enable the computer device to perform various operations of the above methods performed by the first wireless communication device or the second wireless communication device as shown in FIG. 2, FIG. 5, FIG. 8, FIG. 9, FIG. 10, FIG. 15, FIG. 21 and FIG. 24.

The disclosure further provides a chip. The chip is configured to be run in a computer device, to enable the computer device to perform various operations of the above methods performed by the first wireless communication device or the second wireless communication device as shown in FIG. 2, FIG. 5, FIG. 8, FIG. 9, FIG. 10, FIG. 15, FIG. 21 and FIG. 24.

The disclosure further provides a computer program. The computer program is executed by a processor of a computer device, to implement various operations of the above methods performed by the first wireless communication device or the second wireless communication device as shown in FIG. 2, FIG. 5, FIG. 8, FIG. 9, FIG. 10, FIG. 15, FIG. 21 and FIG. 24.

It should be appreciated by those skilled in the art that in the above one or more examples, functions described in the embodiments of the disclosure may be implemented by hardware, software, firmware or any combination thereof. When the functions are implemented by software, the functions may be stored in a computer-readable medium, or served as one or more instructions or codes on the computer-readable medium for transmission. The computer-readable medium includes a computer storage medium and a communication medium. The communication medium includes any medium facilitating to transfer the computer program from one place to another place. The storage medium may be an available media which may be accessed by a general-purpose or special-purpose computer.

The above descriptions are only exemplary embodiments of the disclosure, and are not intended to limit the disclosure. Any modification, equivalent replacement, improvement, or the like made within the spirit and principle of the disclosure should be included in the scope of protection of the disclosure.

## Claims

1. A method for updating a model for processing a wireless channel, carried out by a first wireless communication device, the method comprising:
identifying, by the first wireless communication device, a type of the wireless channel; and
determining, by the first wireless communication device, a wireless channel dataset adapted to the type of the wireless channel, wherein the wireless communication dataset is configured to update a machine learning model.

2. The method of claim 1, wherein determining, by the first wireless communication device, the wireless channel dataset adapted to the type of the wireless channel comprises:
receiving, by the first wireless communication device, a channel generator configured by a second wireless communication device; and
generating, by the first wireless communication device, the wireless channel dataset adapted to the type of the wireless channel according to the channel generator.

3. The method of claim 2, wherein the channel generator is a channel generator, among a plurality of channel generators configured by the second wireless communication device, that corresponds to the type of the wireless channel; or, the channel generator is determined by the second wireless communication device according to the type of the wireless channel, wherein the type of the wireless channel is sent by the first wireless communication device to the second wireless communication device.

4. The method of claim 2, further comprising:
updating, by the first wireless communication device, the machine learning model according to the wireless communication dataset, to obtain an updated machine learning model.

5. The method of claim 4, further comprising:
sending, by the first wireless communication device, the updated machine learning model to the second wireless communication device.

6. The method of claim 2, further comprising:
sending, by the first wireless communication device, the wireless communication dataset to the second wireless communication device; and
receiving, by the first wireless communication device, an updated machine learning model sent by the second wireless communication device, wherein the updated machine learning model is obtained by updating the machine learning model by the second wireless communication device according to the wireless communication dataset.

7. The method of claim 6, further comprising:
sending, by the first wireless communication device, a scheduling request to the second wireless communication device; and
receiving, by the first wireless communication device, first downlink signaling sent by the second wireless communication device, wherein the first downlink signaling is configured to indicate a transmission mode and/or a transmission resource of the wireless channel dataset,
wherein sending, by the first wireless communication device, the wireless communication dataset to the second wireless communication device comprises:
sending, by the first wireless communication device according to the first downlink signaling, the wireless channel dataset to the second wireless communication device.

8. The method of claim 6, further comprising:
sending, by the first wireless communication device, the type of the wireless channel to the second wireless communication device; and
receiving, by the first wireless communication device, trigger signaling provided by the second wireless communication device, wherein the trigger signaling is sent by the second wireless communication device based on the type of the wireless channel,
wherein sending, by the first wireless communication device, the wireless communication dataset to the second wireless communication device comprises:
sending, by the first wireless communication device according to the trigger signaling, the wireless channel dataset to the second wireless communication device.

9. The method of claim 1, wherein determining, by the first wireless communication device, the wireless channel dataset adapted to the type of the wireless channel comprises:
sending, by the first wireless communication device, the type of the wireless channel to a second wireless communication device, wherein the type of the wireless channel is used for the second communication device to generate the wireless channel dataset; and
receiving, by the first wireless communication device, the wireless channel dataset sent by the second wireless communication device.

10. The method of claim 9, further comprising:
updating, by the first wireless communication device, the machine learning model according to the wireless communication dataset, to obtain an updated machine learning model.

11. The method of claim 10, wherein receiving, by the first wireless communication device, the wireless channel dataset sent by the second wireless communication device comprises:
receiving, by the first wireless communication device, second downlink signaling sent by the second wireless communication device, wherein the second downlink signaling is configured to indicate a transmission mode and/or a transmission resource of the wireless channel dataset; and
receiving, by the first wireless communication device according to the second downlink signaling, the wireless communication dataset sent by the second communication device.

12. The method of claim 11, further comprising:
updating, by the first wireless communication device, the machine learning model according to the wireless communication dataset, to obtain the updated machine learning model.

13. The method of any one of claims 1 to 12, wherein a type division mode of the wireless channel is defined by at least one of:
the type division mode of the wireless channel predefined by a communication protocol;
the type division mode of the wireless channel predefined by the first wireless communication device; or
the type division mode of the wireless channel configured by a second wireless communication device to the first wireless communication device.

14. The method of any one of claims 1 to 12, wherein identifying, by the first wireless communication device, the type of the wireless channel comprises:
identifying, by the first wireless communication device, the type of the wireless channel through a channel category discrimination model.

15. The method of claim 14, wherein an output of the channel category discrimination model comprises at least one of: a category identifier of channel environment, a category scenario identifier of the channel environment, or an index category identifier of the channel environment.

16. The method of claim 14, further comprising:
receiving, by the first wireless communication device, the channel category discrimination model configured by a second wireless communication device.

17. The method of claim 16, wherein the channel category discrimination model is configured by at least one of:
downlink control signaling; an Media Access Control Control Element (MAC CE); a Radio Resource Control (RRC) reconfiguration message; a broadcast message; data information carried on a downlink artificial intelligence-type data transmission channel; or data information carried on a downlink data channel.

18. The method of any one of claims 1 to 12, wherein the first wireless communication device cooperates with a second wireless communication device to generate the wireless channel dataset adapted to the type of the wireless channel, the wireless communication dataset is configured to update the machine learning model, and the method comprises:
in case that a machine learning model adapted to the type of the wireless channel is not present among existing machine learning models of the first wireless communication device, generating, by the first wireless communication device, the wireless channel dataset adapted to the type of the wireless channel by cooperating with the second wireless communication device, wherein the wireless communication dataset is configured to update the machine learning model.

19. The method of claim 18, further comprising:
in case that the machine learning model adapted to the type of the wireless channel is present among the existing machine learning models of the first wireless communication device, determining, by the first wireless communication device, the machine learning model corresponding to the type of the wireless channel from the existing machine learning models.

20. The method of claim 19, wherein the existing machine learning models are stored in the first wireless communication device.

21. The method of claim 19, wherein the existing machine learning models are provided by the second wireless communication device to the first wireless communication device.

22. The method of any one of claims 1 to 12, wherein the machine learning model is used for at least one of: channel information feedback, channel estimation, positioning solution, beam management, mobility management, radio resource management, or load balance solution.

23. A method for updating a model for processing a wireless channel, carried out by a second wireless communication device, the method comprising:
determining, by the second wireless communication device, a wireless channel dataset corresponding to a type of the wireless channel, wherein the type of the wireless channel is identified by a first wireless communication device, and the wireless communication dataset is configured to update a machine learning model.

24. The method of claim 23, wherein determining, by the second wireless communication device, the wireless channel dataset corresponding to the type of the wireless channel comprises:
receiving, by the second wireless communication device, the type of the wireless channel provided by the first wireless communication device;
configuring, by the second wireless communication device according to the type of the wireless channel, a channel generator to the first wireless communication device, wherein the wireless channel dataset is generated by the first wireless communication device according to the channel generator, and the channel generator is used for the first wireless communication device to generate the wireless channel dataset; and
receiving, by the second wireless communication device, the wireless communication dataset sent by the first wireless communication device.

25. The method of claim 24, further comprising:
configuring, by the second wireless communication device, a plurality of channel generators to the first wireless communication device, wherein the channel generator corresponding to the type of the wireless channel is present among the plurality of channel generators.

26. The method of claim 24, further comprising:
receiving, by the second wireless communication device, a scheduling request sent by the first wireless communication device; and
sending, by the second wireless communication device, first downlink signaling to the first wireless communication device, wherein the first downlink signaling is configured to indicate a transmission mode and/or a transmission resource of the wireless channel dataset,
wherein receiving, by the second wireless communication device, the wireless communication dataset sent by the first wireless communication device comprises:
receiving, by the second wireless communication device, the wireless channel dataset sent by the first wireless communication device, wherein the wireless channel dataset is sent by the first wireless communication device to the second wireless communication device according to the first downlink signaling.

27. The method of claim 24, further comprising:
sending, by the second wireless communication device based on the type of the wireless channel, trigger signaling to the first wireless communication device, wherein the trigger signaling is used for the first wireless communication device to send the wireless channel dataset corresponding to the type of the wireless channel.

28. The method of claim 24, further comprising:
updating, by the second wireless communication device, the machine learning model according to the wireless communication dataset, to obtain an updated machine learning model.

29. The method of claim 23, wherein determining, by the second wireless communication device, the wireless channel dataset corresponding to the type of the wireless channel comprises:
receiving, by the second wireless communication device, the type of the wireless channel sent by the first wireless communication device; and
generating, by the second wireless communication device, the wireless channel dataset corresponding to the type of the wireless channel.

30. The method of claim 29, further comprising:
sending, by the second wireless communication device, the wireless channel dataset to the first wireless communication device, wherein the wireless communication dataset is used for the first wireless communication device to update the machine learning model, to obtain an updated machine learning model.

31. The method of claim 30, wherein sending, by the second wireless communication device, the wireless channel dataset to the first wireless communication device comprises:
sending, by the second wireless communication device, second downlink signaling to the first wireless communication device, wherein the second downlink signaling is configured to indicate a transmission mode and/or a transmission resource of the wireless channel dataset; and
sending, by the second wireless communication device, the wireless channel dataset to the first wireless communication device through the transmission mode and/or the transmission resource, wherein the wireless channel dataset is used for the first wireless communication device to update the machine learning model.

32. The method of claim 29, further comprising:
updating, by the second wireless communication device, the machine learning model according to the wireless communication dataset, to obtain an updated machine learning model; and
sending, by the second wireless communication device, the updated machine learning model to the first wireless communication device.

33. The method of any one of claims 23 to 32, wherein a type division mode of the wireless channel is defined by at least one of:
the type division mode of the wireless channel predefined by a communication protocol;
the type division mode of the wireless channel predefined by the first wireless communication device; or
the type division mode of the wireless channel configured by the second wireless communication device to the first wireless communication device.

34. The method of any one of claims 23 to 32, wherein the type of the wireless channel is identified by the first wireless communication device through a channel category discrimination model.

35. The method of claim 33, wherein an output of the channel category discrimination model comprises at least one of: a category identifier of channel environment, a category scenario identifier of the channel environment, or an index category identifier of the channel environment.

36. The method of claim 34, further comprising:
configuring, by the second wireless communication device, the channel category discrimination model to the first wireless communication device.

37. The method of claim 36, wherein the channel category discrimination model is configured by at least one of: downlink control signaling; an Media Access Control Control Element (MAC CE); a Radio Resource Control (RRC) reconfiguration message; a broadcast message; data information carried on a downlink artificial intelligence-type data transmission channel; or data information carried on a downlink data channel.

38. The method of any one of claims 23 to 33, wherein the second wireless communication device cooperates with the first wireless communication device to generate the wireless channel dataset corresponding to the type of the wireless channel, and the method comprises:
in case that the machine learning model adapted to the type of the wireless channel is not present among existing machine learning models of the second wireless communication device, generating, by the second wireless communication device, the wireless channel dataset corresponding to the type of the wireless channel by cooperating with the first wireless communication device, wherein the wireless communication dataset is configured to update the machine learning model.

39. The method of claim 38, further comprising:
in case that the machine learning model adapted to the type of the wireless channel is present among the existing machine learning models of the second wireless communication device, determining, by the second wireless communication device, the machine learning model corresponding to the type of the wireless channel from the existing machine learning models.

40. The method of claim 39, wherein the existing machine learning models are stored in the second wireless communication device.

41. The method of claim 39, wherein the existing machine learning models are provided by the first wireless communication device to the second wireless communication device.

42. The method of any one of claims 23 to 32, wherein the machine learning model is used for at least one of: channel information feedback, channel estimation, positioning solution, beam management, mobility management, radio resource management, or load balance solution.

43. A first wireless communication apparatus, comprising:
a first updating module, configured to identify a type of a wireless channel; and
a first cooperation module, configured to determine a wireless channel dataset adapted to the type of the wireless channel, wherein the wireless communication dataset is configured to update a machine learning model.

44. The apparatus of claim 43, wherein the first cooperation module is further configured to receive a channel generator configured by a second wireless communication apparatus, and the first updating module is further configured to generate the wireless channel dataset adapted to the type of the wireless channel according to the channel generator.

45. The apparatus of claim 44, wherein the channel generator is a channel generator, among a plurality of channel generators configured by the second wireless communication apparatus, that corresponds to the type of the wireless channel; or, the channel generator is determined by the second wireless communication apparatus according to the type of the wireless channel, wherein the type of the wireless channel is sent by the first wireless communication apparatus to the second wireless communication apparatus.

46. The apparatus of claim 44, wherein the first updating module is further configured to update the machine learning model according to the wireless communication dataset, to obtain an updated machine learning model.

47. The apparatus of claim 46, wherein the first wireless communication apparatus is further configured to send the updated machine learning model to the second wireless communication apparatus.

48. The apparatus of claim 44, wherein the first cooperation module is further configured to send the wireless communication dataset to the second wireless communication apparatus, and
the first cooperation module is further configured to receive an updated machine learning model sent by the second wireless communication apparatus, wherein the updated machine learning model is obtained by updating the machine learning model by the second wireless communication apparatus according to the wireless communication dataset.

49. The apparatus of claim 48, wherein the first cooperation module is further configured to send a scheduling request to the second wireless communication apparatus,
the first cooperation module is further configured to receive first downlink signaling sent by the second wireless communication apparatus, wherein the first downlink signaling is configured to indicate a transmission mode and/or a transmission resource of the wireless channel dataset, and
the first cooperation module is further configured to send, according to the first downlink signaling, the wireless channel dataset to the second wireless communication apparatus.

50. The apparatus of claim 48, wherein the first cooperation module is further configured to send the type of the wireless channel to the second wireless communication apparatus,
the first cooperation module is further configured to receive trigger signaling provided by the second wireless communication apparatus, wherein the trigger signaling is sent by the second wireless communication apparatus based on the type of the wireless channel, and
the first cooperation module is further configured to send, according to the trigger signaling, the wireless channel dataset to the second wireless communication apparatus.

51. The apparatus of claim 43, wherein the first cooperation module is further configured to send the type of the wireless channel to a second wireless communication apparatus, wherein the type of the wireless channel is used for the second communication device to generate the wireless channel dataset, and
the first cooperation module is further configured to receive the wireless channel dataset sent by the second wireless communication apparatus.

52. The apparatus of claim 51, wherein the first updating module is further configured to update the machine learning model according to the wireless communication dataset, to obtain an updated machine learning model.

53. The apparatus of claim 52, wherein the first cooperation module is further configured to receive second downlink signaling sent by the second wireless communication apparatus, wherein the second downlink signaling is configured to indicate a transmission mode and/or a transmission resource of the wireless channel dataset, and
the first cooperation module is further configured to receive, according to the second downlink signaling, the wireless communication dataset sent by the second wireless communication apparatus.

54. The apparatus of claim 50, wherein the first updating module is further configured to update the machine learning model according to the wireless communication dataset, to obtain the updated machine learning model.

55. The apparatus of any one of claims 43 to 54, wherein a type division mode of the wireless channel is defined by at least one of:
the type division mode of the wireless channel predefined by a communication protocol;
the type division mode of the wireless channel predefined by the first wireless communication apparatus; or
the type division mode of the wireless channel configured by a second wireless communication apparatus to the first wireless communication apparatus.

56. The apparatus of any one of claims 43 to 54, wherein the first updating module is further configured to identify the type of the wireless channel through a channel category discrimination model.

57. The apparatus of claim 56, wherein an output of the channel category discrimination model comprises at least one of: a category identifier of the wireless channel, a category scenario identifier of the wireless channel, or an index category identifier of the wireless channel.

58. The apparatus of claim 56, wherein the first cooperation module is further configured to receive a channel category discrimination model configured by a second wireless communication apparatus.

59. The apparatus of claim 49, wherein the channel category discrimination model is configured by at least one of: downlink control signaling; an Media Access Control Control Element (MAC CE); a Radio Resource Control (RRC) reconfiguration message; a broadcast message; data information carried on a downlink artificial intelligence-type data transmission channel; or data information carried on a downlink data channel.

60. The apparatus of any one of claims 43 to 54, wherein in case that a machine learning model adapted to the type of the wireless channel is not present among existing machine learning models of the first wireless communication apparatus, the first cooperation module is further configured to generate the wireless channel dataset adapted to the type of the wireless channel by cooperating with the second wireless communication apparatus, wherein the wireless communication dataset is configured to update the machine learning model.

61. The apparatus of claim 51, wherein in case that a machine learning model adapted to the type of the wireless channel is present among existing machine learning models of the first wireless communication apparatus, the first cooperation module is further configured to determine the machine learning model corresponding to the type of the wireless channel from the existing machine learning models.

62. The apparatus of claim 61, wherein the existing machine learning models are stored in the first wireless communication apparatus.

63. The apparatus of claim 61, wherein the existing machine learning models are provided by the second wireless communication apparatus to the first wireless communication apparatus.

64. The apparatus of any one of claims 43 to 54, wherein the machine learning model is used for at least one of: channel information feedback, channel estimation, positioning solution, beam management, mobility management, radio resource management, or load balance solution.

65. A second wireless communication apparatus, comprising:
a second cooperation module, configured to determine a wireless channel dataset corresponding to a type of a wireless channel, wherein the type of the wireless channel is identified by a first wireless communication apparatus, and the wireless communication dataset is configured to update a machine learning model.

66. The apparatus of claim 65, wherein the second cooperation module is further configured to receive the type of the wireless channel provided by the first wireless communication apparatus,
the second cooperation module is further configured to configure a channel generator to the first wireless communication apparatus according to the type of the wireless channel, wherein the wireless channel dataset is generated by the first wireless communication apparatus according to the channel generator, and the channel generator is used for the first wireless communication device to generate the wireless channel dataset, and
the second cooperation module is further configured to receive the wireless communication dataset sent by the first wireless communication apparatus.

67. The apparatus of claim 66, wherein the second cooperation module is further configured to configure a plurality of channel generators to the first wireless communication apparatus, wherein the channel generator corresponding to the type of the wireless channel is present among the plurality of channel generators.

68. The apparatus of claim 66, wherein the second cooperation module is further configured to receive a scheduling request sent by the first wireless communication apparatus,
the second cooperation module is further configured to send first downlink signaling to the first wireless communication apparatus, wherein the first downlink signaling is configured to indicate a transmission mode and/or a transmission resource of the wireless channel dataset, and
the second cooperation module is further configured to receive the wireless channel dataset sent by the first wireless communication apparatus, wherein the wireless channel dataset is sent by the first wireless communication apparatus to the second wireless communication apparatus according to the first downlink signaling.

69. The apparatus of claim 66, wherein the second cooperation module is further configured to send trigger signaling to the first wireless communication apparatus according to the type of the wireless channel, wherein the trigger signaling is used for the first wireless communication device to send the wireless channel dataset corresponding to the type of the wireless channel.

70. The apparatus of claim 66, wherein a second updating module is further configured to update the machine learning model according to the wireless communication dataset, to obtain an updated machine learning model.

71. The apparatus of claim 65, wherein the second cooperation module is further configured to receive the type of the wireless channel sent by the first wireless communication apparatus, and
a second updating module is further configured to generate the wireless channel dataset corresponding to the type of the wireless channel.

72. The apparatus of claim 71 wherein the second cooperation module is further configured to send the wireless channel dataset to the first wireless communication apparatus, wherein the wireless communication dataset is used for the first wireless communication device to update the machine learning model, to obtain an updated machine learning model.

73. The apparatus of claim 72, wherein the second cooperation module is further configured to send second downlink signaling to the first wireless communication apparatus, wherein the second downlink signaling is configured to indicate a transmission mode and/or a transmission resource of the wireless channel dataset, and
the second cooperation module is further configured to send the wireless channel dataset to the first wireless communication apparatus through the transmission mode and/or the transmission resource, wherein the wireless channel dataset is used for the first wireless communication device to update the machine learning model.

74. The apparatus of claim 71, wherein the second updating module is further configured to update the machine learning model according to the wireless communication dataset, to obtain an updated machine learning model, and
the second cooperation module is further configured to send the updated machine learning model to the first wireless communication apparatus.

75. The apparatus of any one of claims 65 to 74, wherein a type division mode of the wireless channel is defined by at least one of:
the type division mode of the wireless channel predefined by a communication protocol;
the type division mode of the wireless channel predefined by the first wireless communication apparatus; or
the type division mode of the wireless channel configured by the second wireless communication apparatus to the first wireless communication apparatus.

76. The apparatus of any one of claims 65 to 74, wherein the type of the wireless channel is identified by the first wireless communication apparatus through a channel category discrimination model.

77. The apparatus of claim 76, wherein an output of the channel category discrimination model comprises at least one of: a category identifier of the wireless channel, a category scenario identifier of the wireless channel, or an index category identifier of the wireless channel.

78. The apparatus of claim 77, wherein the second cooperation module is further configured to configure the channel category discrimination model to the first wireless communication apparatus.

79. The apparatus of claim 76, wherein the channel category discrimination model is configured by at least one of: downlink control signaling; an Media Access Control Control Element (MAC CE); a Radio Resource Control (RRC) reconfiguration message; a broadcast message; data information carried on a downlink artificial intelligence-type data transmission channel; or data information carried on a downlink data channel.

80. The apparatus of any one of claims 65 to 74, wherein in case that the machine learning model adapted to the type of the wireless channel is not present among existing machine learning models of the second wireless communication apparatus, the second cooperation module is further configured to generate the wireless channel dataset corresponding to the type of the wireless channel by cooperating with the first wireless communication apparatus, wherein the wireless communication dataset is configured to update the machine learning model.

81. The apparatus of claim 80, wherein in case that the machine learning model adapted to the type of the wireless channel is present among the existing machine learning models of the second wireless communication apparatus, the second cooperation module is further configured to determine the machine learning model corresponding to the type of the wireless channel from the existing machine learning models.

82. The apparatus of claim 81, wherein the existing machine learning models are stored in the second wireless communication apparatus.

83. The apparatus of claim 81, wherein the existing machine learning models are provided by the first wireless communication apparatus to the second wireless communication apparatus.

84. The apparatus of any one of claims 65 to 74, wherein the machine learning model is used for at least one of: channel information feedback, channel estimation, positioning solution, beam management, mobility management, radio resource management, or load balance solution.

85. A terminal, comprising:
a processor;
a transceiver connected to the processor; and
a memory configured to store instructions executable by the processor,
wherein the processor is configured to load and execute the executable instructions, to implement the method for updating the machine learning model for processing the wireless channel of any one of claims 1 to 22, or implement the method for updating the machine learning model for processing the wireless channel of any one of claims 23 to 42.

86. A computer-readable storage medium, wherein the computer-readable storage medium have stored thereon at least one instruction, at least one section of program, a code set or an instruction set, and the at least one instruction, the at least one section of program, the code set or the instruction set is loaded and executed by a processor, to implement the method for updating the machine learning model for processing the wireless channel of any one of claims 1 to 22, or implement the method for updating the machine learning model for processing the wireless channel of any one of claims 23 to 42.
